# EUROPÄISCHE PATENTSCHRIFT

(11) **EP 0 496 840 B1**
(45) Veröffentlichungstag und Bekanntmachung des Hinweises auf die Patenterteilung: **13.07.1994**
(21) Anmeldenummer: 91907257.9
(22) Anmeldetag: 17.04.1991
(51) Int. Cl.: B23B 31/02

(54) **WERKZEUGAUFNAHME**
TOOL HOLDING FIXTURE
RACCORDEMENT D'OUTIL

(30) Priorität: 21.08.1990 CH 2706/90
(43) Veröffentlichungstag der Anmeldung: 05.08.1992
(73) Patentinhaber: PLANETRON AG, 4554 Etziken (CH)
(72) Erfinder: BLASER, Kurt, CH-4528 Zuchwil (CH)
(74) Vertreter: Feldmann, Clarence Paul
(86) Internationale Anmeldenummer: CH9100090
(87) Internationale Veröffentlichungsnummer: WO9203242

(56) Entgegenhaltungen:
- WO-A-80/01364
- FR-A- 2 586 951
- US-A- 3 261 236
- US-A- 3 379 077

## Beschreibung

Die vorliegende Erfindung betrifft eine Einrichtung zur Einstellung des Rundlaufes einer Werkzeugaufnahme. Eine solche Einrichtung ist z.B. in der WO-A-8001364 beschrieben. Dem Rundlauf von rotierenden Werkzeugen wird grösste Wichtigkeit beigemessen. Insbesondere beim Fräsen, Bohren und Reiben bewirkt ein exakter Rundlauf eine höhere Standzeit der Werkzeuge und folglich weniger Werkzeugwechselunterbrüche. Auch müssen die Werkzeuge weniger oft nachgeschärft werden, so dass die Werkzeuge besser ausgenützt und die Kosten gesenkt werden. Abweichungen vom Rundlauf führen zu radialen Störkräften, die nicht nur die Werkzeuge schädigen und zu einer stärkeren Abnützung führen, sondern bewirken auch eine schlechtere Massgenauigkeit an den zu bearbeitenden Werkstücken. Es ist folglich wünschenswert, den Rundlauf möglichst genau einstellen zu können.

Bisher versuchte man insbesondere die Aufnahmekörper mit einem hochexakten Rundlauf zu fertigen. Allfällige Fehler, die werkzeugbehaftet sind oder beim Einspannen des Werkzeuges entstehen, wurden dabei nicht kompensiert.

Neuerdings sind nun auch Aufnahmekörper bekannt, bei denen bereits eine Korrektur vorgesehen ist, welche die beim Einspannen des Werkzeugs entstehende Abweichung kompensiert. Dies geschieht durch einen speziell gefertigten exzentrischen Schliff des konischen Aufnahmekörpers.

Auch bekannt sind mehrteilige Grundaufnahmen zur Einstellung des Rundlaufes nach Einspannung des Werkzeuges. Neben der relativ komplexen Einstellung solcher mehrteiliger Grundaufnahmekörper wird bei einer solchen Konstruktion auch die Stabilität beeinflusst.

Die vorliegende Erfindung stellt sich daher die Aufgabe, eine Einrichtung zu schaffen, mit der der Rundlauf einer einteiligen Werkzeugaufnahme eingestellt werden kann. Insbesondere soll diese Einstellung auch an der Maschine selbst mit eingesetztem Aufnahmekörper und eingespanntem Werkzeug erfolgen können.

Diese Aufgabe löst eine Einrichtung zur Einstellung des Rundlaufes einer Werkzeugaufnahme mit den kennzeichnenden Merkmalen des Patentanspruches 1.

Erfolgt eine solche Einstellung direkt an der Maschine, so lassen sich sämtliche Rundlaufsummenfehler, die sich vom Werkzeug über die Spannzange die Aufnahme inklusive der Steilkegelaufnahme bis hin zur Spindellagerabweichungen ausgeglichen werden können. Besonders vorteilhafte Ausgestaltungsformen des Erfindungsgegenstandes sind in den abhängigen Patentansprüchen aufgeführt und in der nachfolgenden Beschreibung erläutert. In der Zeichnung ist ein Ausführungsbeispiel des Erfindungsgegenstandes dargestellt und in der anschliessenden Beschreibung erläutert. Es zeigt:

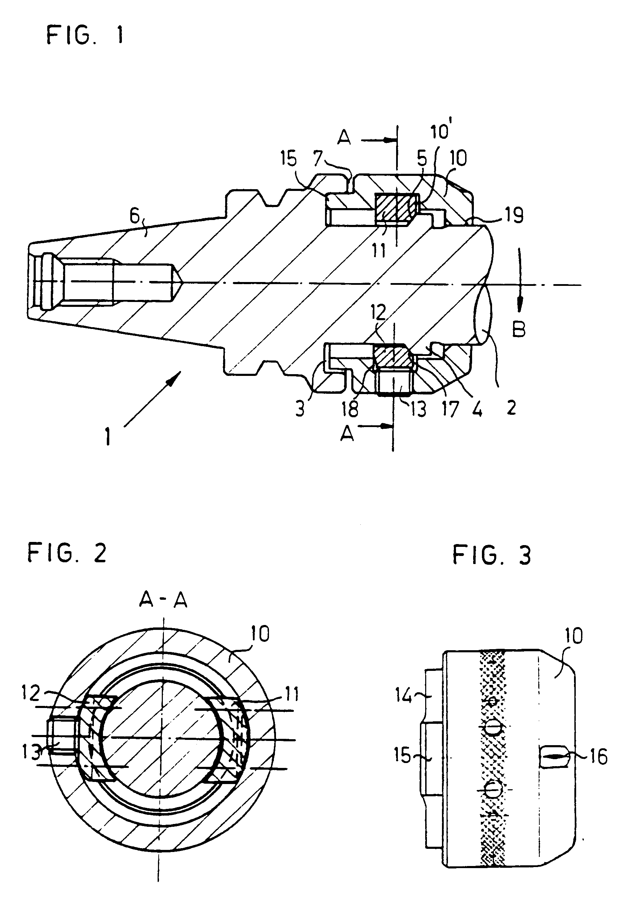

- Fig. 1: einen achsialen Längsschnitt durch eine Werkzeugaufnahme mit Rundlaufeinstelleinrichtung und
- Fig. 2: einen Querschnitt entlang der Linie A-A gemäss der Fig. 1 sowie
- Fig. 3: eine Seitenansicht des zur Einrichtung gehörenden Ueberwurfringes.

Die in seiner Form in wesentlichen konventionelle Werkzeugaufnahme besteht aus einem rotationssymmetrischen Körper 1 und einem daran anschliessenden Schaft 2.

Aufnahmekörper 1 und Schaft 2 bilden eine einteilige Einheit, die aus einem Rundstahl gedreht ist. Der Aufnahmekörper ist rotationssymmetrisch und in der Zeichnung als Steilkegelkonus dargestellt. Selbstverständlich kommt statt der Steilkegelaufnahme auch jede andere mögliche rotationssymmetrische Aufnahme in Frage. Es wird daher nachfolgend auch meist lediglich von einem rotationssymmetrischen Aufnahmekörper gesprochen. Wie üblich hat auch hier der Aufnahmekörper 1 im Bereich seines Ueberganges zum Schaft 2 einen erweiterten Durchmesser. In der so entstandenen Schulter ist eine achsial gerichtete, ringförmige Nut 3 eingelassen. Die konzentrisch um den Schaft 2 laufende Nut ist so geformt, dass ihre innere Wand von Schaft 2 gebildet wird. Vom Boden der Nut 3 um etwa den Radius des Schaftes 2 entfernt ist der Schaft mit einem ringförmigen Kragen 4 versehen. Der Kragen 4 ist wiederum am Schaft einstückig angeformt. Der ringförmige Kragen 4 hat eine zur Nut hin geneigte Flanke 5. Die Neigung der Flanke beträgt ca. 45° zur Längsachse des Schaftes.

Die gegenüberliegende Flanke des Kragens 4 steht mindestens annähernd radial nach aussen vom Schaft 2 ab. Die Höhe des Kragens 4 ist geringer als die Breite der umlaufenden Ringnut 3.

Auf den Schaft 2 aufgesetzt ist ein verdrehbarer Ueberwurfring 10. Dessen stirnseitige Durchgangsbohrung 19 ist exakt passend auf den Schaft 2 der Werkzeugaufnahme angepasst. Die Mantelwand des Ueberwurfringes 10 ist an ihrem hinteren Ende so stark verjüngt, dass der Ueberwurfring 10 in die Ringnut 3 des Aufnahmekörpers 1 mit Spiel hineinpasst. In der Innenseite des Ueberwurfringes 10 ist eine umlaufende Nut (10′) mit rechteckigem Querschnitt eingelassen in der zwei einander diametral gegenüberliegende Nutensteine lagern. Die Nutensteine 11 und 12 sind zwar in radialer und achsialer Richtung bezüglich des Schaftes 2 beweglich gelagert, jedoch gegen Verdrehungen in jener Nut gesichert. Beide Nutensteine 11 und 12 sind mit Auflaufkanten 17 versehen, die der Neigung der Flanke 5 des Kragens 4 angepasst sind. Auf den in der Zeichnung unteren Nutenstein 12 drückt eine achsial nach innen gerichtete Druckschraube 13. Diese Schraube 13 ist beispielsweise als Madenschraube mit Innensechskant ausgestaltet. Ueber diese Schraube 13 lässt sich nun ein Druck auf den Nutenstein 12 ausüben, wodurch eine Zugkraft auf den Schaft 2 ausgeübt wird und via dem Ueberwurfring 10 ein Druck auf den Aufnahmekörper 1 geleitet wird. Nun weist der Ueberwurfring 10 an seiner Stirnseite 14 eine entsprechende Erhöhung 15 auf, so dass die Druckkraft ausserhalb dem Zentrum und asymmetrisch vom Ueberwurfring 10 auf den Aufnahmekörper 1 übertragen wird.

In der Folge wird ein Biegemoment in Richtung des Pfeiles B auf den Schaft 2 ausgeübt. Hierbei führt natürlich der Ueberwurfring 10 eine leichte Kippbewegung durch. Um diese Kippbewegung zu gewährleisten, muss der Ueberwurfring 10 mit Spiel in der Nut 3 Aufnahme finden, wie dies bereits weiter oben beschrieben worden ist. Die Kippbewegung, die eigentlich mehr eine geringfügige Verformung des Ueberwurfringes 10 und eine leichte Biegung des Schaftes 2 ist, verlangt auch eine geringe Bewegungsfreiheit des Nutensteines 12, auf den die Druckschraube 13 wirkt. Damit sich der Nutenstein 12 nicht in der Nut 10′ verkantet und damit den Ueberwurfring 10 auf dem Schaft 2 verklemmt, ist der Nutenstein 12 teilweise mit seiner zur Nut 3 hingerichteten Stirnfläche 18 abgeschrägt.

Das Uebersetzungsverhältnis, das durch viele geometrische Faktoren der Konstruktion, wie beispielsweise dem Durchmesser, die Neigung der geneigten Flanke 5 des Kragens 4 und der Auflaufkante 17 an den Nutensteinen bedingt.

Die Rundlaufeinstellung lässt sich mit dieser Einrichtung sowohl nur an der Werkzeugaufnahme allein oder wie bereits vorher beschrieben mit dem aufgespannten Werkzeug durchführen. Dies kann entweder auf einem bekannten Voreinstellgerät oder mittels Ständer und Messuhr direkt auf der Maschine erfolgen. Hierzu wird zuerst der höchste Punkt ermittelt, worauf der Ueberwurfring so gedreht wird, dass eine auf ihn aussen angebrachte Markierungskerbe 16 auf jenen höchsten Punkt ausgerichtet ist. Nun wird die Druckschraube 13 soweit angezogen, dass der höchste Punkt um die Hälfte des Ausschlages der Messuhr zurückgestellt ist. Hiermit ist bereits die Einstellung vollendet. Der Rundlauffehler lässt sich hiermit auf eine Grössenordnung von 0,001 mm reduzieren. Obwohl selbstverständlich verschiedene geometrische Anordnungen der verschiedenen Konstruktionselemente möglich ist, mit denen das gewünschte Biegemoment auf den Schaft ausgeübt wird, ist sicherlich eine wirtschaftlich bevorzugte Lösung die in der Zeichnung dargestellte, mit nur zwei einander diagonal gegenüberliegenden Nutensteinen 11 und 12. So liesse sich beispielsweise das gewünschte Biegeelement auch bewirken durch ein Einlageteil in der Ringnut 3, doch ist dies sicherlich eine komplexere Lösung. Besonders vorteilhaft ist es, die Erhöhung 15 am Ueberwurfring 10 an einer der Druckschraube 13 diametral gegenüberliegenden Seite anzuordnen. Hierdurch ist sicherlich der Hebel maximal ausgelegt.

Es kann vorteilhaft sein, um die Ringnut 3 mit einer nach aussen geneigten Seitenwand und die Ueberhöhung, die sich von dieser Seitenwand dann abstützt mit einer gleichgeneigten Auflagefläche zu versehen. Dies kann eventuell den spezifischen Druck vermindern und die Gefahr einer Kerbwirkung senken.

## Patentansprüche

1. Einrichtung zur Einstellung des Rundlaufes einer Werkzeugaufnahme, dadurch gekennzeichnet, dass die Werkzeugaufnahme, bestehend aus einem rotations-symmetrischen Körper (1) und anschliessendem Schaft (2), einteilig ist und in Uebergangsbereich zwischen Körper und Schaft eine achsialgerichtete, zum Schaft (2) konzentrische Nut (3) hat, und dass am Schaft ein ringförmiger Kragen (4) mit zur Nut hin geneigter Flanke (5) angeformt ist, und dass auf dem Schaft ein den Kragen (4) umgreifender, in die Ringnut eingreifender, verdrehbarer Ueberwurfring (10) sitzt, der eine Ringnut (10′) aufweist in der radial und achsial bewegliche, jedoch gegen Drehungen in der Nut (10′) gesicherte, keilförmige Nutensteine (11,12) lagern, die sich auf der geneigten Flanke (5) des Kragens (4) abstützen, und dass im Ueberwurfring (10) eine Druckschraube (13) angebracht ist, mittels der über die Nutensteine und dem Ueberwurfring ein Biegemoment auf den Schaft ausüben lässt.

2. Einrichtung nach Anspruch 1, dadurch gekennzeichnet, dass der Ueberwurfring (10) an seiner in die Ringnut (3) liegenden Stirnseite (14) eine Ueberhöhung (15) aufweist.

3. Einrichtung nach Anspruch 2, dadurch gekennzeichnet, dass die Erhöhung (15) am Ueberwurfring (10) an der der Druckschraube (13) diametral gegenüberliegenden Seite angeordnet ist.

4. Einrichtung nach Anspruch 2, dadurch gekennzeichnet, dass mittig der Erhöhung ausgerichtet eine Markierkerbe (16) am Aussenumfang des Ueberwurfringes (10) angebracht ist.

5. Einrichtung nach Anspruch 1, dadurch gekennzeichnet, dass die Nutensteine (11, 12) eine geneigte Auflaufkante (17) haben, die mindestens annähernd die gleiche Neigung als die geneigte Flanke (5) des Kragens (4) aufweisen.

6. Einrichtung nach Anspruch 1, dadurch gekennzeichnet, dass der im Bereich der Druckschraube (13) angeordnete Nutenstein (12) eine zur Ringnut (3) im Körper (1) geneigte Stirnfläche (18) hat.

7. Einrichtung nach Anspruch 1, dadurch gekennzeichnet, dass der Aufnahmekörper (1) eine Steilkegelaufnahme (6) ist.

8. Einrichtung nach Anspruch 2, dadurch gekennzeichnet, dass die Ringnut (3) eine nach aussen geneigte Seiten- wand aufweist, auf die die Ueberhöhung mit annähernd gleich geneigter Auflagefläche aufliegt.

## Claims

1. A device for adjusting the true running of a tool carrier, characterised in that the tool carrier - consisting of a body (1) presenting rotation symmetry and a shaft (2) attached thereto - is in one part and has a groove (3) in the transition region between body and shaft, this groove (3) being concentric with the shaft (2) and axially-directed, and in that an annular collar (4) with a flank (5) inclined towards the groove is moulded on the shaft, and in that on the shaft there is a rotatable screw collar ring (10) which grips around the collar (4), engages into the annular groove and has an annular groove (10′) in which there lie wedge-shaped sliding blocks (11, 12) which are radially and axially movable yet secured against rotation in the groove (10′) and which are supported on the inclined flank (5) of the collar (4), and in that in the screw collar ring (10) there is mounted a pressure screw (13) by means of which a bending moment can be exerted on the shaft via the sliding blocks and the screw collar ring.

2. A device in accordance with Claim 1, characterised in that the screw collar ring (10) has an elevated region (15) at its front end (14) lying in the annular groove (3).

3. A device in accordance with Claim 2, characterised in that the elevated region (15) on the screw collar ring (10) is arranged at the side diametrically opposite the pressure screw (13).

4. A device in accordance with Claim 2, characterised in that a marker notch (16) is provided at the outer circumference of the screw collar ring (10) and is aligned with the centre of the raised region.

5. A device in accordance with Claim 1, characterised in that the sliding blocks (11, 12) have an inclined abutting edge (17), the latter having - substantially at least - the same inclination as the inclined flank (5) of the collar (4).

6. A device in accordance with Claim 1, characterised in that the sliding block (12) arranged in the region of the pressure screw (13) has a front surface (18) inclined towards the annular groove (3) in the body (1).

7. A device in accordance with Claim 1, characterised in that the receiving body (1) is a receiver (6) having a steep-angle taper.

8. A device in accordance with Claim 2, characterised in that the annular groove (3) has a lateral wall which is inclined towards the exterior and on which the elevated region lies with a support surface having substantially the same inclination.

## Revendications

1. Dispositif pour régler le centrage d'un porte-outil, caractérisé par le fait que le porte-outil, lequel est constitué par un corps symétrique de révolution (1) et par une queue (2) qui se raccorde à celui-ci, est réalisé en une seule pièce et comporte, dans la zone de transition entre le corps et la queue, une rainure (3) qui est dirigée axialement et qui est concentrique à la queue (2), par le fait qu'un collet annulaire (4) est formé sur la queue en présentant un flanc (5) incliné vers la rainure, par le fait qu'est monté sur la queue un chapeau annulaire (10) que l'on peut faire tourner, qui entoure le collet (4), qui pénètre dans la rainure annulaire et qui présente une rainure annulaire (10′) dans laquelle sont logées des clavettes en forme de coins (11, 12) qui sont mobiles radialement et axialement, mais qui sont empêchées de tourner dans la rainure (10′), et qui s'appuient sur les flancs inclinés (5) du collet (4), et par le fait qu'est montée dans le chapeau annulaire (10) une vis de serrage (13) au moyen de laquelle un couple de flexion peut être exercé sur la queue par l'intermédiaire des clavettes et du chapeau annulaire.

2. Dispositif selon la revendication 1, caractérisé par le fait que le chapeau annulaire (10) présente une surélévation (15) sur son côté frontal (14) qui est situé dans la rainure annulaire (3).

3. Dispositif selon la revendication 2, caractérisé par le fait que la surélévation (15) est disposée sur le chapeau annulaire (10) sur le côté de celui-ci qui est diamétralement opposé à la vis de serrage (13).

4. Dispositif selon la revendication 2, caractérisé par le fait qu'une entaille servant de repère (16) est ménagée sur le pourtour extérieur du chapeau annulaire (10) en étant alignée sur le milieu de la surélévation.

5. Dispositif selon la revendication 1, caractérisé par le fait que les clavettes (11, 12) présentent un bord de contact incliné (17) qui présente, du moins approximativement, la même inclinaison que le flanc incliné (5) du collet (4).

6. Dispositif selon la revendication 1, caractérisé par le fait que la clavette (12) qui est située dans la région de la vis de serrage (13) présente une surface frontale (18) qui est inclinée vers la rainure annulaire (3) dans le corps (1).

7. Dispositif selon la revendication 1, caractérisé par le fait que le corps (1) du porte-outil est un cône (6) à forte conicité.

8. Dispositif selon la revendication 2, caractérisé par le fait que la rainure annulaire (3) présente une paroi latérale qui est inclinée vers l'extérieur et sur laquelle la surélévation porte par une surface d'appui présentant approximativement la même inclinaison.
